Europäisches Patentamt

**European Patent Office**

**Office européen des brevets**

(19)

(11) Numéro de publication : **0 112 243**
**B1**

(12) **FASCICULE DE BREVET EUROPÉEN**

(45) Date de publication du fascicule du brevet :
03.12.86

(21) Numéro de dépôt : 83402363.2

(22) Date de dépôt : 06.12.83

(51) Int. Cl.⁴ : **H 04 Q 11/04,** H 04 M 11/06,
H 04 N 7/00

(54) **Régie d'abonné pour système de télécommunications et de télédistribution et procédé de traitement de signaux numériques.**

(30) Priorité : 06.12.82 FR 8220369

(43) Date de publication de la demande :
27.06.84 Bulletin 84/26

(45) Mention de la délivrance du brevet :
03.12.86 Bulletin 86/49

(84) Etats contractants désignés :
BE DE GB IT NL

(56) Documents cités :
EP-A- 0 020 878
INTERNATIONAL SWITCHING SYMPOSIUM, Session
I41B, papier 5, 21-25 septembre 1981, pages 1-6,
Montreal, CA. J. P. ANDRY et al.: "Multiservice
subscriber connection terminal for local digital
networks"
INTERNATIONAL SWITCHING SYMPOSIUM, session
22B, papier 1, 21-25 septembre 1981, pages 1-8,
Montreal, CA. J. G. DUPIEUX et al.: "The application
of fiber optics to the introduction of new services in
local networks"

(73) Titulaire : **SOCIETE ANONYME DE TELECOMMUNI-
CATIONS**
41, rue Cantagrel
F-75624 Paris Cedex 13 (FR)

(72) Inventeur : **Ab Der Halden, Charles Henri Georges**
75, rue du Javelot Tour Athènes
F-75645 Paris Cedex 13 (FR)

(74) Mandataire : **Arnaud, Jean Pierre Alfred**
**Cabinet Arnaud 94 rue Saint-Lazare**
**F-75009 Paris (FR)**

## Description

La présente invention concerne une régie d'abonné destinée à un système de télécommunications et de télédistribution, et un procédé de traitement de signaux numériques. Plus précisément, l'invention concerne un appareillage destiné à être monté d'une part entre un câble de communications à fibres optiques et d'autre part des terminaux de différents types.

La suite du présent mémoire décrit essentiellement l'invention dans son application à un système de communications et de télédistribution dans lequel des abonnés disposant d'un terminal visiophonique, d'un ou plusieurs terminaux de télévision et d'un terminal sous forme d'un amplificateur de haute-fidélité, peuvent recevoir des services distribués tels qu'un service de télévision ou un service de programmes de haute-fidélité, et des services commutés, tels qu'un service téléphonique, visiophonique et de consultation de banques de données. A cet effet, les abonnés sont reliés à un centre de commutation et de distribution par l'intermédiaire de deux fibres optiques, l'une constituant un circuit aller et l'autre un circuit retour. L'invention concerne essentiellement le traitement effectué sur les signaux provenant d'une fibre optique et destinés aux terminaux et provenant des terminaux et destinés à l'autre fibre optique.

On connaît déjà un terminal décrit dans la communication « Multiservice subscriber connection terminal for local digital networks » présentée par Andry et al. au International Switching Symposium, Session 41B, 21-25 sept. 1981 Montréal. Ce terminal comporte une unité de gestion comportant un multiplexeur-démultiplexeur placé entre une ligne d'abonné et un circuit de codage-décodage relié à un combiné téléphonique. Un circuit logique gère les diverses opérations. Cet appareil ne traite que des signaux numériques échangés entre un abonné disposant de plusieurs périphériques et un réseau commuté. Les opérations exécutées par cet appareil ne sont que des commutations de différents signaux de données transmis par la ligne d'abonné aux différents périphériques. Les signaux échangés entre le réseau et l'appareil sont de type électrique.

L'invention concerne un appareil qui assure à la fois un traitement de signaux analogiques, tels qu'un filtrage, une transposition de fréquence, etc. et un traitement de signaux numériques représentatifs soit de signaux sonores soit de signaux de commande ou de demande qui définissent les conditions d'exécution des différents échanges.

Dans cet exemple considéré plus en détail dans la suite du présent mémoire, l'installation d'abonné reçoit des programmes de services distribués, tels que des programmes de télévision et de son haute-fidélité, et des signaux de services commutés qui sont d'une part des signaux téléphoniques classiques et d'autre part des signaux visiophoniques. Le son du signal visiophonique est transmis sous forme numérique avec des signaux de commande. Tous les signaux sont transmis par une même fibre optique et une gamme déterminée de fréquences est attribuée à chacun de ces signaux.

L'installation d'abonné comprend essentiellement une régie d'abonné qui reçoit les signaux d'une fibre optique, qui les traite afin qu'ils conviennent aux différents terminaux, qui interroge ceux-ci afin qu'elle détermine qu'une demande de programme ou de mise en communication a été effectuée par l'abonné, et qu'elle transmette, par l'autre fibre optique, un signal composite comprenant plusieurs signaux compris chacun dans une gamme de fréquences.

Dans un mode de réalisation avantageux de l'invention, l'installation d'abonné est organisée autour d'une ligne commune comprenant un câble coaxial transmettant tous les signaux vidéo, dans des gammes déterminées de fréquences, et deux lignes dont l'une transmet le son visiophonique et une autre les signaux de commande et de demande échangés entre la régie d'abonné et les terminaux.

L'invention concerne plus précisément le traitement des signaux numériques effectué dans la régie d'abonné d'une part sur les signaux sonores numérisés et les signaux de commande séparés du signal composite reçu par l'intermédiaire d'une fibre optique, et d'autre part sur les signaux de son visiophonique et de demande provenant des terminaux transmis à l'autre fibre optique.

Plus précisément, l'invention concerne une régie d'abonné destinée à être montée entre d'une part une paire de fibres optiques destinées à transmettre un signal optique composite représentatif d'au moins un signal vidéo, d'au moins un signal sonore numérisé et d'au moins un signal global de commande, échangé entre la régie et un centre de raccordement, et d'autre part au moins deux terminaux dont l'un au moins est destiné à recevoir un signal vidéo et dont l'un au moins est destiné à recevoir un signal sonore, chaque terminal étant destiné à être commandé par un signal spécifique de commande et à transmettre à la régie des signaux spécifiques de demande de mise en communication, un terminal au moins étant destiné à transmettre un signal sonore à la régie ; cette régie comporte :

— un récepteur destiné à être couplé à l'une des fibres optiques et à transformer un signal optique composite d'entrée en un signal électrique composite représentatif d'au moins un signal vidéo, d'au moins un signal sonore numérisé et d'au moins un signal global de commande,

— un circuit d'aiguillage destiné à recevoir le signal électrique composite et à séparer au moins un signal sonore numérisé et un signal global de commande,

— un appareil de traitement de signaux numériques, comprenant :

— un second circuit d'aiguillage destiné à recevoir au moins le signal sonore numérisé et le signal global de commande et à les séparer l'un de l'autre,

— un circuit de codage-décodage destiné à décoder les signaux sonores numérisés provenant du second circuit d'aiguillage et à coder des signaux sonores provenant d'au moins un terminal afin qu'ils forment des signaux sonores numérisés,

— un circuit de gestion de liaisons destiné d'une part à recevoir le signal global de commande du second circuit d'aiguillage et à transmettre au moins un signal de commande spécifique d'un terminal et d'autre part à recevoir les signaux spécifiques de demande de mise en communication des terminaux et à former des signaux globaux de demande, et

— un premier circuit de combinaison destiné à recevoir au moins un signal sonore numérisé représentatif d'un signal sonore provenant d'un terminal et au moins un signal global de demande provenant du circuit de gestion, et à former des signaux numériques comprenant ces signaux sonores numérisés et ces signaux globaux de demande,

— un second circuit de combinaison, autre que celui de l'appareil de traitement et destiné à recevoir au moins un signal vidéo provenant d'un terminal, le signal sonore numérisé et le signal global de demande de l'appareil de traitement, et à former un signal électrique composite de sortie, et

— un émetteur destiné à être couplé à l'autre fibre optique et à transformer le signal électrique composite de sortie en un signal optique composite correspondant.

Dans un mode de réalisation avantageux, le second circuit d'aiguillage comporte un décodeur biphase et un démultiplexeur, et le premier circuit de combinaison comporte un multiplexeur et un codeur biphase. En outre, le second circuit d'aiguillage et le premier circuit de combinaison peuvent former une interface numérique.

Il est avantageux que le circuit de gestion des liaisons comporte un microprocesseur associé à des mémoires et à des interfaces. Les mémoires comprennent de préférence des circuits tampons d'entrée de signaux globaux de commande, de sortie de signaux spécifiques de commande, d'entrée de signaux spécifiques de demande, de sortie de signaux globaux de demande, et de signaux intermédiaires. Les interfaces comprennent de préférence une première interface destinée à échanger des signaux globaux à une première vitesse, et une seconde interface destinée à échanger des signaux spécifiques à une seconde vitesse.

Il est avantageux que la régie comporte un circuit de scrutation périodique destiné à déterminer successivement l'état de tous les terminaux et à valider l'émission d'un signal de demande par un terminal quelconque. Il est aussi avantageux qu'elle comporte un circuit de veille destiné à commander ou interrompre l'alimentation d'une partie au moins de la régie, à détecter la réception par l'appareil de traitement d'un signal de commande ou d'un signal de demande au moins et à provoquer en conséquence l'alimentation d'une partie au moins de la régie qui est alors à l'état désexcité.

Il est en outre avantageux que la régie comporte en outre un circuit de test destiné à former un circuit de dérivation à l'intérieur de la régie d'abonné sous forme d'un circuit de bouclage renvoyant un signal vidéo d'une première fibre à une seconde.

Dans une variante, la régie comporte en outre un circuit d'adaptation destiné à recevoir d'une part le signal électrique composite d'entrée et d'autre part un signal vidéo transposé d'entrée et comprenant un premier circuit destiné à recevoir le signal composite et à le transmettre à un terminal, et un second circuit destiné à recevoir le signal vidéo transposé d'entrée et comprenant un circuit de transposition de fréquence.

Il est en outre avantageux que la régie comporte une sortie coaxiale destinée à transmettre des signaux analogiques, notamment des signaux vidéo, une sortie de signaux numériques de commande, et une sortie de signaux sonores sous forme analogique.

Enfin, dans un mode de réalisation, elle est destinée à transmettre à un terminal, sous forme d'au moins un signal vidéo du signal composite reçu par la régie, un signal comprenant en combinaison des signaux analogiques représentatifs d'images et d'un son de haute qualité associé.

L'invention concerne aussi un procédé de traitement de signaux numériques de commande et de demande, du type qui comprend d'une part la réception de signaux globaux de commande et la formation de signaux spécifiques de commande et d'autre part la réception de signaux spécifiques de demande et la formation de signaux de demande ; ce procédé comprend :

— une conversion d'un premier type des signaux globaux de commande en signaux intermédiaires de commande,

— une conversion d'un second type des signaux intermédiaires de commande en signaux spécifiques de commande,

— une conversion d'un troisième type des signaux spécifiques de demande en signaux intermédiaires de demande,

— une conversion d'un quatrième type de signaux intermédiaires de demande en signaux globaux de demande, et

— la mémorisation temporaire des signaux intermédiaires, le traitement comprenant, en alternance et de façon répétitive,

— une première étape comprenant une conversion du premier ou du quatrième type ou une détermination du fait qu'une telle conversion ne peut pas être exécutée immédiatement, et

— une seconde étape comportant une conversion du second ou du troisième type ou une détermination du fait que cette conversion ne peut pas être exécutée immédiatement.

Il est avantageux que le procédé comprenne en outre la mémorisation temporaire des signaux globaux et spécifiques.

D'autres caractéristiques et avantages de l'invention ressortiront mieux de la description qui va suivre, faite en référence aux dessins annexés sur lesquels :

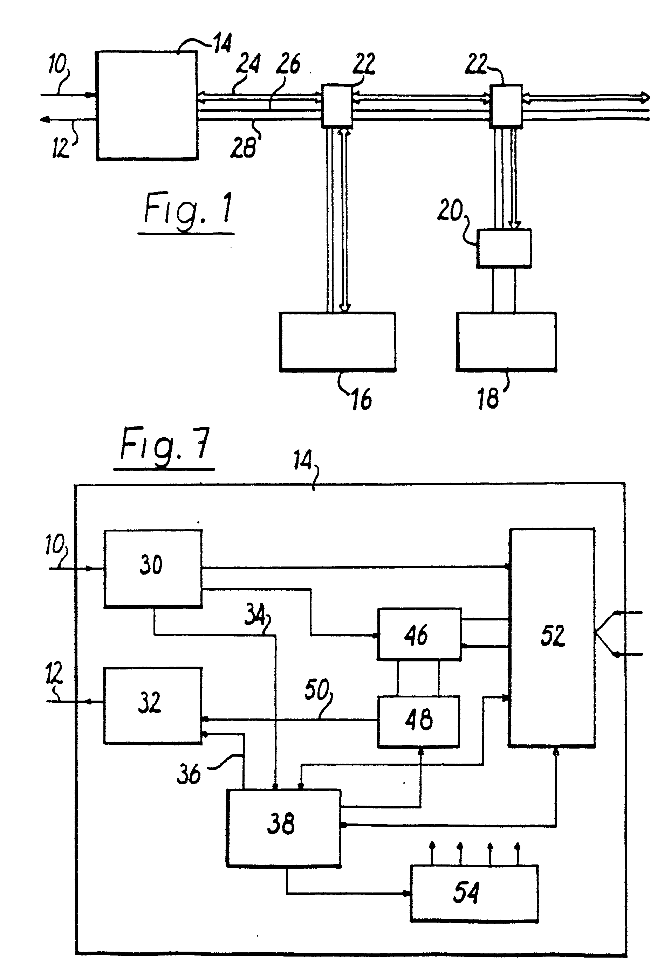

la figure 1 est un diagramme synoptique représentant les principaux éléments d'une installation d'abonné ;

les figures 2 et 3 sont des graphiques représentant les spectres de fréquence des signaux transmis par les fibres optiques de réception et d'émission respectivement ;

les figures 4, 5 et 6 sont des graphiques représentant les spectres des signaux d'une ligne commune coaxiale, d'une ligne de transmission de signaux numériques et d'une ligne de transmission de sons respectivement, montées entre la régie d'abonné et certains terminaux ;

la figure 7 est un diagramme synoptique d'une régie d'abonné selon l'invention ;

la figure 8 est un diagramme synoptique détaillé du circuit de traitement de signaux numériques de la régie de la figure 7 ;

les figures 9 et 10 sont des diagrammes synoptiques de la tête optique de réception et de la tête optique d'émission, respectivement, de la régie d'abonné ;

la figure 11 est un diagramme synoptique d'un circuit d'adaptation visiophonique de la régie de la figure 7 ;

la figure 12 est un diagramme synoptique d'une jonction d'appartement de la régie de la figure 7 ;

la figure 13 est un diagramme synoptique d'un terminal visiophonique qui constitue un exemple de terminal d'une installation d'abonné selon l'invention ;

la figure 14 représente un mode de réalisation de circuit d'interface de télévision destiné à être associé à un terminal à moniteur de télévision ;

la figure 15 est un diagramme synoptique représentant l'organisation générale d'un circuit de gestion d'un appareil de traitement de signaux numériques d'une régie selon l'invention, dans un mode de réalisation ; et

la figure 16 est un organigramme illustrant un exemple d'échange entre la régie d'abonné et un terminal.

On considère d'abord de façon générale les caractéristiques essentielles du système de télécommunications et de télédistribution auquel est intégré l'appareil selon l'invention. L'installation d'abonné est reliée à un centre de raccordement ou de commutation par une première fibre optique 10 de réception et une seconde fibre optique 12 d'émission. Ces fibres parviennent à une régie d'abonné 14 dans laquelle les signaux optiques reçus sont mis sous forme électrique et traités convenablement et dans laquelle des signaux provenant de terminaux tels que 16, 18 sont traités et mis sous forme optique avant transmission par la fibre 12. Dans un exemple, ces terminaux sont un visiophone 16 et un moniteur 18 de télévision. Celui-ci est connecté par l'intermédiaire d'un module 20 d'interface. Chaque terminal est raccordé par un boîtier 22 de connexion à une ligne commune qui comporte une ligne coaxiale 24, et deux lignes 26 et 28, avantageusement sous forme de paires symétriques. Comme le système dont fait partie l'installation d'abonné assure de nombreux services et la transmission de signaux très différents, il est essentiel que ces signaux ne se perturbent pas mutuellement.

Ainsi, le système assure un service visiophonique bilatéral, c'est-à-dire qu'un signal vidéo et un signal sonore sont transmis par la fibre 10 et qu'un signal vidéo et un signal sonore sont transmis en retour par la fibre 12. Le système distribue aussi des programmes de télévision et d'images animées. Ces programmes peuvent être choisis parmi un certain nombre, par exemple quinze ou trente, et, en plus du signal vidéo visiophonique, la fibre 10 peut transmettre jusqu'à deux signaux différents de télévision. Le système transmet aussi des programmes stéréophoniques dont l'un quelconque peut être sélectionné par l'abonné et peut donc être transmis par la fibre 10, en même temps que les autres signaux.

Bien entendu, une signalisation échangée entre le centre de raccordement et l'abonné s'ajoute à tous les signaux indiqués précédemment afin que les communications puissent être établies et supervisées, en plus de diverses fonctions telles que la télémaintenance, la télésurveillance, etc.

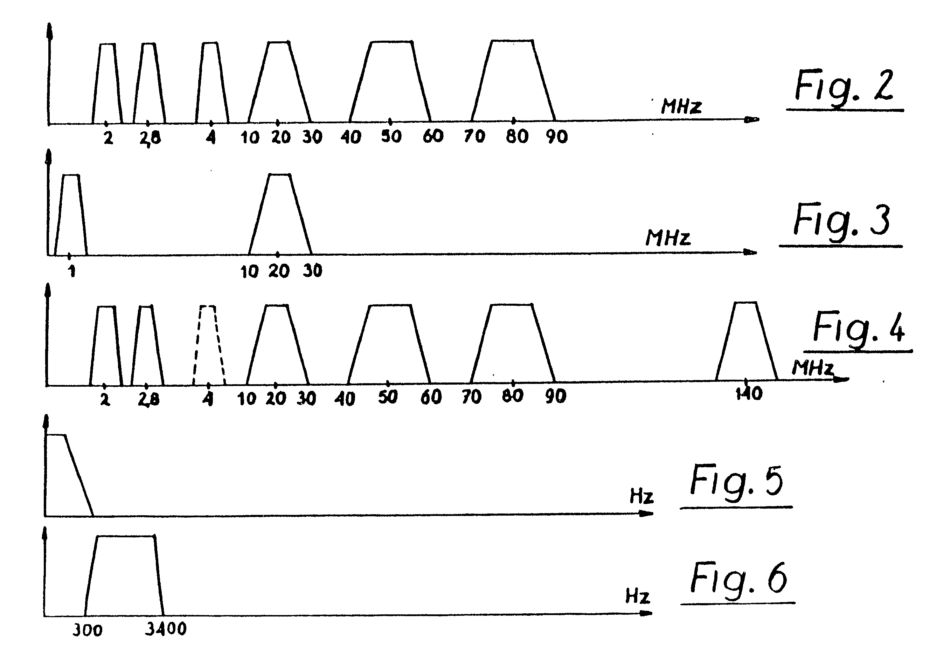

Dans l'exemple considéré, les figures 2 et 3 indiquent comment ces différents signaux sont transmis.

Un signal haute-fidélité est modulé en fréquence sur deux sous-porteuses à 2 et 2,8 MHz, pour les canaux droit et gauche respectivement. Une excursion de fréquence de 75 kHz permet facilement la modulation par les signaux d'audiofréquences dans une bande de base allant de 40 Hz à 15 kHz.

Un signal numérique est transmis avec un débit de 128 kbit/s et comporte d'une part le son du visiophone modulé par impulsions et codage à 64 kbit/s et d'autre par un canal de données à 64 kbit/s. Ce signal codé en biphase module en amplitude par tout ou rien une sous-porteuse à une fréquence voisine de 4 MHz. Il est avantageux que ce signal présente un viol de la modulation biphase tous les 64 bits afin que la synchronisation des deux trains numériques puisse être détectée.

Le signal visiophonique est modulé en fréquence par un signal vidéo de type normalisé, sur une sous-porteuse à 20 MHz.

La figure 2 indique aussi qu'un premier signal de télévision est modulé en fréquence sur une sous-porteuse à 50 MHz. Cette modulation est réalisée de façon classique à partir du signal vidéo normalisé, ayant un son modulé préalablement en fréquence sur une sous-porteuse à 7,5 MHz. Il faut d'ailleurs noter que le son visiophonique peut être avantageusement associé à son signal vidéo de la manière qu'on vient de décrire pour le signal de télévision. L'abonné peut alors recevoir un son de haute qualité sur son visiophone.

Un second signal de télévision est modulé en fréquence sur une sous-porteuse à 80 MHz, de la même manière que le premier signal de télévision.

Les signaux transmis par la fibre optique 12 de la régie d'abonné vers le centre de raccordement sont moins nombreux. En effet, ils comprennent simplement des signaux numériques modulés sur une sous-porteuse à une fréquence voisine de 1 MHz, sous forme d'un signal ayant un débit de 128 kbit/s et tout à fait semblable au signal numérique reçu par la fibre 10.

La fibre optique 12 de retour transmet aussi un signal visiophonique tout à fait analogue au signal transmis par la fibre 10 de réception puisqu'il est modulé de la même manière que celle-ci sur une sous-porteuse à 20 MHz.

Les figures 4 à 6 représentent les spectres de fréquence des signaux échangés entre la régie d'abonné et les terminaux. Ces signaux sont transmis par la ligne commune coaxiale (figure 4), par une première ligne sous forme d'une paire symétrique (figure 5) et par une seconde ligne sous forme d'une paire symétrique (figure 6).

La ligne commune coaxiale transmet certains signaux qui, sous forme électrique, correspondent aux signaux de la fibre de réception 10. Ces signaux sont les suivants :
— les signaux des deux canaux de haute-fidélité, modulés sur des sous-porteuses à 2 et 2,8 MHz,
— le signal visiophonique reçu modulé sur une sous-porteuse à 20 MHz, et
— les deux signaux de télévision modulés sur des sous-porteuses à 50 et 80 MHz.

On a cependant représenté en traits interrompus l'emplacement de la plage de fréquences qui, dans la fibre optique, est réservée aux signaux numériques. Les signaux numériques sont transmis par la ligne commune coaxiale mais ne sont pas exploités. On note qu'un signal est modulé sur une sous-porteuse à 140 MHz. Ce signal représente le signal visiophonique émis tout à fait analogue au signal visiophonique reçu, modulé sur une sous-porteuse à 20 MHz, mais ayant subi une transposition de fréquence de 120 MHz, si bien que cette plage de fréquences est centrée sur la fréquence de 140 MHz. Cette transposition de fréquence est indispensable puisque les images visiophoniques reçue et émise sont transmises par une même ligne commune alors qu'elles sont échangées entre le centre de raccordement et la régie 14 par deux voies séparées (fibres 10 et 12).

Les figures 5 et 6 indiquent que les signaux numériques, échangés entre la régie et les terminaux, et les signaux sonores sont transmis sur des lignes séparées et ne peuvent donc pas se perturber mutuellement.

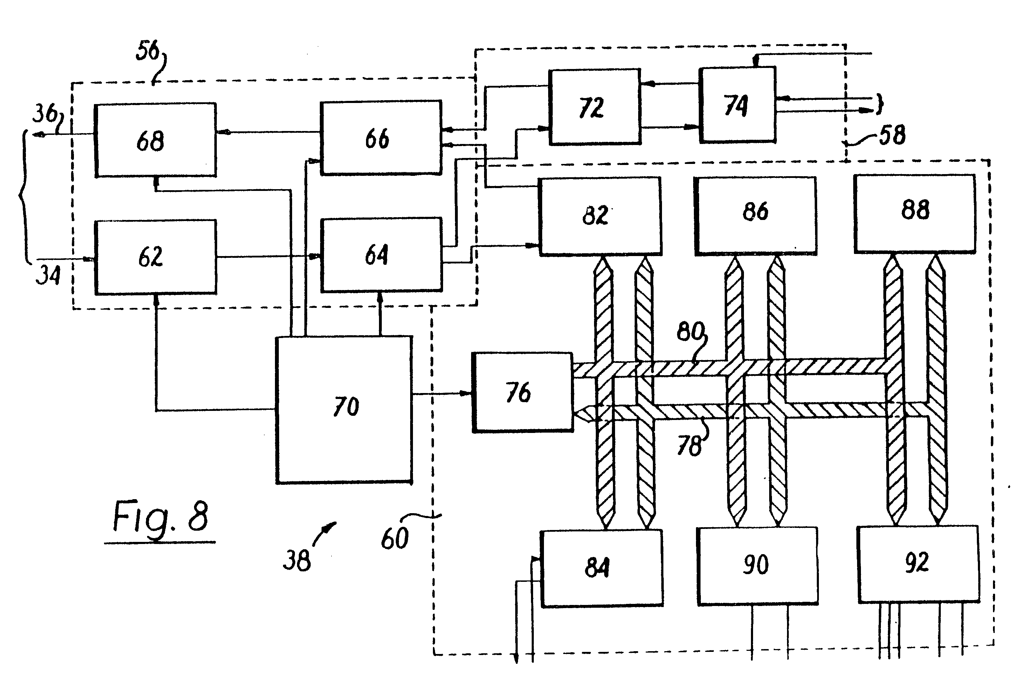

La figure 7 représente la structure générale de la régie d'abonné. Celle-ci est reliée à la première fibre optique 10 par une tête optique 30 de réception. L'autre fibre optique 12 est reliée à une tête optique 32 d'émission. Les deux têtes optiques 30, 32 sont reliées par des lignes 34 et 36 à un appareil 38 de traitement de signaux numériques réalisé selon l'invention.

La tête optique 30 de réception reçoit donc un signal optique composite et constitue un premier circuit d'aiguillage car elle sépare les signaux numériques transmis par la ligne 34 des signaux analogiques qui sont transmis à un circuit 46 d'adaptation au visiophone qui filtre le signal composite afin d'en séparer le seul signal visiophonique.

Un circuit 48 de test est relié au circuit 46 d'adaptation visiophonique afin que, en mode de test, le signal visiophonique séparé par filtrage par le circuit 46 soit renvoyé à la tête 32 d'émission par une ligne 50. De même, le signal visiophonique reçu de la ligne commune coaxiale par l'intermédiaire de la jonction 52 d'appartement parvient au circuit 46 d'adaptation visiophonique qui effectue la transposition de fréquence nécessaire. Ainsi, le circuit de test permet la vérification du fonctionnement du circuit de transmission visiophonique jusqu'à la régie.

La jonction 52 d'appartement est destinée à coupler les signaux provenant des différents circuits d'adaptation et de l'appareil 38 de traitement de signaux numériques à la ligne commune et aux différents terminaux.

La régie 14 comporte en outre des alimentations 54 comprenant notamment un circuit de veille décrit plus en détail dans la suite du présent mémoire.

On considère maintenant plus en détail l'appareil 38 de traitement de signaux numériques. Celui-ci comprend essentiellement une interface numérique 56, un circuit de codage-décodage son 58 et un circuit 60 de gestion de liaisons.

L'interface numérique 56 reçoit les signaux numériques de la tête optique 30 de réception par la ligne 34 sur un décodeur biphase 62 qui alimente un démultiplexeur 64. Celui-ci joue le rôle d'un circuit d'aiguillage puisqu'il sépare le signal sonore numérisé et le transmet au circuit 58 de codage-décodage, et le signal numérique ou signal de commande qu'il transmet au circuit 60 de gestion.

L'interface numérique 56 comporte en outre un multiplexeur 66 qui reçoit le signal sonore numérisé provenant du circuit 58 de codage-décodage et le signal numérique formé par le circuit 60 de gestion et qui les transmet à un codeur biphase 68 qui, par l'intermédiaire de la ligne 36, alimente la tête optique 32 d'émission. Le multiplexeur 66 joue donc le rôle d'un circuit de combinaison de signaux numériques provenant de plusieurs sources.

Il faut noter que le fonctionnement du codeur et du décodeur biphase ainsi que du multiplexeur et du démultiplexeur, est synchronisé par une base de temps 70 qui est aussi reliée au circuit 60 de gestion des liaisons.

Le circuit 58 de codage-décodage reçoit le signal du démultiplexeur 64 et le décode dans un codeur-décodeur 72 avant de le transmettre à un joncteur 74 et à la jonction d'appartement. Par ailleurs, le son du visiophone transmis par la jonction d'appartement parvient au joncteur 74 qui le transmet au codeur-décodeur 72 qui le met sous forme numérique et le transmet à son tour au multiplexeur 66. La ligne représentée à la partie supérieure du joncteur 74 représente une téléalimentation. Il faut en effet noter que, même en cas de pannes diverses, il est souhaitable que le service téléphonique continue d'être assuré. Il faut noter que le son téléphonique est en fait le son visiophonique et est donc transmis par les chaînes de circuits 62, 64, 72, 74 d'une part et 74, 72, 66 et 68 d'autre part.

Le circuit 60 de gestion des liaisons comporte essentiellement un microprocesseur 76 qui échange des informations par une ligne commune 78 de données et une ligne commune 80 d'adresse avec différents circuits. Ceux-ci comportent une interface HDLC 82, c'est-à-dire une interface adaptée au débit et au format des signaux numériques échangés avec le multiplexeur 66 et le démultiplexeur 64. Ces circuits comportent aussi une interface asynchrone 84 avec surveillance d'activité qui est reliée à la jonction d'appartement 52 et qui est destinée à mettre les signaux numériques sous une forme convenant à l'échange d'informations avec les terminaux.

Le circuit 60 comporte en outre, de manière connue, une mémoire de programme 86 et une mémoire vive de données 88, ainsi que des circuits 90 d'entrée et 92 de sortie. Tous ces circuits sont de type connu et on les décrit donc pas en détail.

Ainsi, l'interface 84 assure l'échange d'informations avec les terminaux. Au contraire, les circuits 90 et 92 d'entrée et de sortie sont destinés à l'échange d'informations avec différents circuits de la régie d'abonné, comme décrit plus en détail dans la suite du présent mémoire. Il s'agit donc de signaux internes qui ne sont pas transmis aux fibres optiques ni aux terminaux.

Ces différents signaux de commande permettent à l'appareil 38 de traitement d'établir des liaisons aller et retour entre la régie d'abonné et un centre secondaire, à la suite d'un appel provenant du centre secondaire ou d'un terminal. Il assure aussi un dialogue avec ce centre secondaire lorsque la liaison est en cours. Il assure aussi un dialogue avec les terminaux dès que, après une scrutation périodique des terminaux, il a déterminé qu'un terminal avait un message à transmettre. Lorsqu'une communication est en cours, l'appareil interroge les différents terminaux et, de manière générale, il assure la supervision de toute l'installation d'abonné.

Selon une caractéristique avantageuse, seuls les circuits d'entrée et de sortie sont alimentés en permanence. Lorsqu'aucune communication n'est établie, le circuit de gestion est en veille. Par contre, dès qu'un signal de commande est détecté en provenance du centre secondaire ou d'un terminal, l'appareil est réactivé et exécute les fonctions demandées.

On considère maintenant les circuits qui sont directement reliés à l'appareil de traitement de signaux numériques, c'est-à-dire les têtes optiques de réception et d'émission, l'adaptation visiophone, la jonction d'appartement ainsi que le circuit de test et l'alimentation.

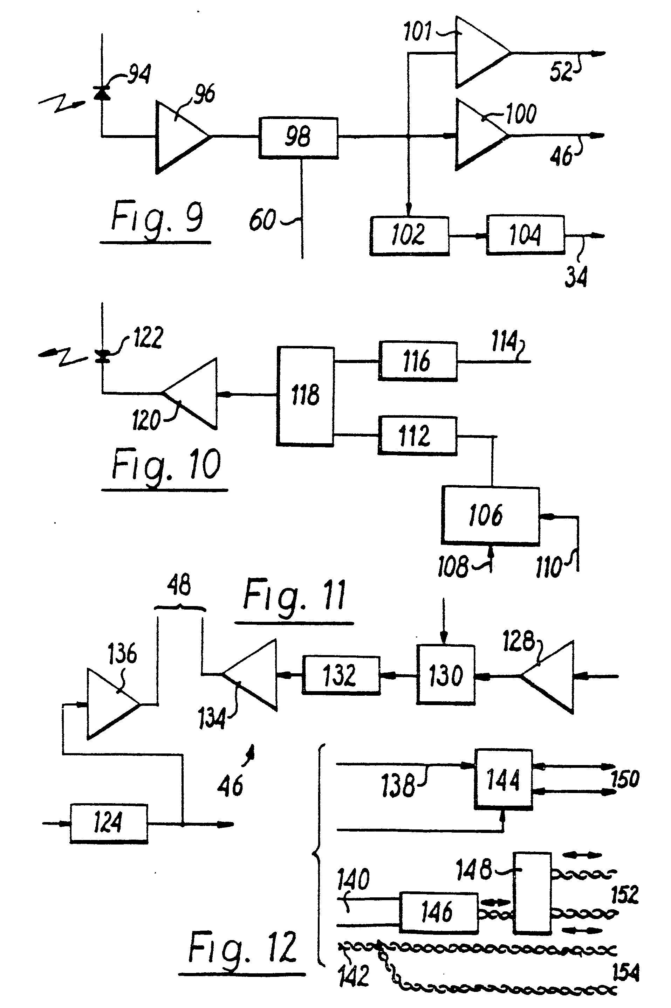

Les figures 9 et 10 sont des diagrammes synoptiques de la tête optique de réception et de la tête optique d'émission. Une diode PIN 94 reçoit le signal optique composite de la fibre 10 et le met sous forme d'un signal électrique composite correspondant. Ce signal parvient à un préamplificateur 96 qui le transmet à un circuit 98 de réglage automatique du gain. Ce circuit est lui-même relié aux circuits d'entrée-sortie du circuit 60 de gestion. Le signal transmis par le circuit 98 parvient à trois circuits. D'abord, il arrive à un amplificateur 100 qui transmet le signal composite au circuit d'adaptation visiophonique 46 et il est transmis à un amplificateur 101 à la jonction 52, comme indiqué précédemment en référence à la figure 7. Enfin, il parvient à un circuit 102 de démodulation et de filtrage des signaux numériques. Ce circuit est relié, par l'intermédiaire d'un circuit 104 de détection, à l'appareil de traitement de signaux par la ligne 34. La tête comporte en outre une alimentation qui reçoit un signal de commande transmis par le circuit de sortie du circuit 60 de gestion. De cette manière, le circuit ne fonctionne que lors de la réception de signaux.

La figure 10 représente schématiquement la tête optique d'émission qui comporte un modulateur 106 d'amplitude qui reçoit d'une part le signal numérique 108 à 128 kbit/s et d'autre part une porteuse 110, par exemple à 1,024 MHz. Le signal formé, après passage dans un filtre 112, parvient à un circuit 118 de combinaison qui reçoit aussi le signal 114 du visiophone après passage dans un filtre 116. Le signal composite électrique formé par le circuit 118 parvient à un amplificateur 120 puis à une diode photoémissive 122. Bien entendu, ces différents circuits reçoivent de l'énergie d'une alimentation qui est activée ou désactivée par un signal transmis par le circuit 60 de gestion par l'intermédiaire de son circuit de sortie 92.

Ainsi, la tête optique de réception joue le rôle d'un circuit d'aiguillage qui sépare les signaux numériques des signaux analogiques et vidéo. D'autre part, la tête optique d'émission joue le rôle d'un circuit de combinaison des signaux numériques et du signal analogique formant le signal vidéo du visiophone.

Il faut d'ailleurs noter que, dans le présent mémoire, l'expression « signal vidéo » est utilisée pour la désignation aussi bien d'un signal vidéo proprement dit correspondant à une norme telle qu'un signal vidéo « SECAM », qu'un signal vidéo modulé sur une porteuse ou transposé dans une plage quelconque de fréquences.

On considère maintenant, à titre d'exemple de circuit d'adaptation, le circuit d'adaptation visiophonique qui est celui qui échange le plus de signaux avec l'appareil de traitement de signaux numériques.

Ce module d'adaptation visiophonique représenté schématiquement sur la figure 11 reçoit le signal électrique composite de la tête optique de réception par un filtre 124 qui a une bande passante comprise entre 10 et 30 MHz. De cette manière, seul le signal visiophonique est transmis. L'image visiophonique qui doit être émise est transposée sur une porteuse à 140 MHz, comme décrit en référence à la figure 4. Ensuite, après passage dans un amplificateur 128, le signal visiophonique subit dans le circuit 130 une transposition de fréquence autour de 20 MHz. En conséquence, le filtre 132 qui a une bande passante comprise entre 10 et 30 MHz, transmet un signal vidéo, convenablement amplifié dans le circuit 134, au circuit de test. Celui-ci reçoit aussi le signal composite reçu provenant de la sortie du filtre 124 et d'un amplificateur 136.

On considère, en référence à la figure 12, la structure de la jonction d'appartement. Celle-ci comporte en fait des circuits parallèles. Le signal 138, provenant du circuit d'adaptation visiophonique parvient à un coupleur 144 qui est relié à une sortie 150 destinée à être reliée au câble coaxial 24.

Les signaux numériques 140 provenant de l'appareil de traitement de signaux numériques parviennent à une interface 146 puis à un coupleur 148 qui est relié à une sortie 152 destinée à être connectée à la paire symétrique 26. Enfin, le signal de son visiophonique 142 provenant du jonchteur 74 est transmis directement à une sortie 154 qui est destinée à être connectée à la paire symétrique 28.

On ne décrit pas en détail d'autres circuits contenus dans la régie, car ils sont connus des hommes du métier. Par exemple, des alimentations transmettent les tensions nécessaires et coopèrent avec un circuit de veille, comme décrit précédemment, afin que la consommation d'énergie soit minimale lorsque l'appareil n'est pas en communication.

Comme tout circuit à microprocesseur, le circuit de gestion comporte avantageusement certaines caractéristiques de sécurité ou autres qui accroissent sa souplesse d'utilisation. Par exemple, le circuit de gestion comporte de préférence un circuit « chien de garde » destiné à éviter que le circuit fonctionne perpétuellement en boucle fermée.

Par ailleurs, la régie comporte un circuit de test qu'on a pas représenté car il comporte simplement des sélecteurs qui permettent la réalisation de bouclages d'images qui peuvent être télécommandés. Il peut cependant s'agir de circuits complexes permettant la transmission du signal visiophonique à d'autres terminaux ou la transmission de signaux de télévision au terminal visiophonique.

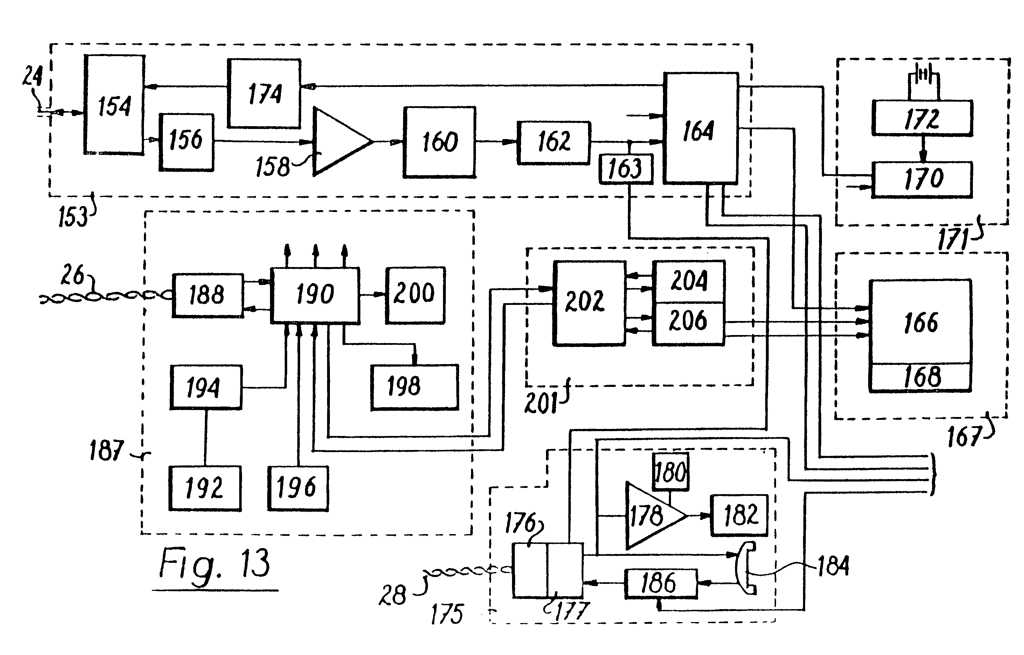

La figure 13 représente, à titre d'exemple de terminal, le schéma synoptique d'un terminal visiophonique. Ce terminal est considéré plus en détail pour la description d'un exemple de procédure de traitement exécutée par l'appareil 38.

Le terminal visiophonique comporte d'abord un modulateur-démodulateur 153 qui est relié au câble coaxial 24 de la ligne commune d'appartement. Ce circuit comporte successivement un coupleur 154, un filtre 156, un amplificateur 158, un démodulateur 160, un autre filtre 162 et, en parallèle, un démodulateur son haute qualité 163 et un sélecteur 164 d'image. Les signaux sont alors transmis à un ensemble 167 de visualisation qui comporte une console 166 munie de réglages 168.

D'autre part, un ensemble 171 de prises de vues comporte une caméra 170 et une base de temps 172 et transmet un signal visiophonique à émettre au sélecteur 164. Celui-ci transmet le signal au coupleur 154 par l'intermédiaire d'un modulateur 174.

Le son visiophonique est transmis par la seconde paire symétrique 28 et parvient à un appareillage spécifique 175 qui comporte un jonchteur 176. Celui-ci transmet le signal à un sélecteur son 177 recevant d'autre part le son haute qualité 163, par l'intermédiaire d'un amplificateur 178 muni d'un dispositif 180 de réglage de gain, à un haut-parleur 182. Le signal peut aussi parvenir directement à l'écouteur d'un combiné téléphonique 184. Le microphone de ce dernier renvoie le son à un coupleur 186 et au jonchteur 176 puis à la régie d'abonné.

Le terminal visiophonique comporte un circuit 187 de commande qui reçoit les signaux de la paire formant la ligne commune numérique 26. Les signaux parviennent à un circuit 188 d'interface et à une logique 190 de gestion du terminal visiophonique. Cette logique est associée de manière connue à un clavier téléphonique 192, par l'intermédiaire d'un codeur 194, et à des touches 196 de fonction. Par ailleurs, un circuit 198 de supervision et une sonnerie 200 complètent le circuit 187. La logique 190 est destinée à transmettre divers signaux de commande par exemple à l'alimentation, au sélecteur d'image, aux dispositifs de réglage des paramètres de l'image, etc. Elle échange aussi des informations avec un microprocesseur 202 d'un circuit « Vidéotex » 201 qui permet l'affichage de pages de données sur la console 166 de visualisation. Le circuit 201 comporte à cet effet une mémoire 204 de page et un générateur 206 de caractères.

Par exemple, les touches de fonction 196 comportent une première touche « ligne » qui permet la prise de ligne sans décrochage du combiné. Une autre touche « image » permet l'établissement de la communication visuelle lorsque la communication téléphonique normale a été établie. Une touche « contrôle » permet le contrôle de l'image transmise sans que celle-ci cesse d'être transmise. Une touche « menu » permet la commande de la présentation sur l'écran d'une page d'informations « Vidéotex », définissant des procédures d'accès à différents services offerts. Une touche « document » est utilisée lorsqu'un document doit être transmis. Une touche « extérieur » permet la transmission de l'image provenant d'une source extérieure telle qu'un magnétoscope. Il s'agit simplement d'exemples de touches, permettant un grand nombre d'opérations.

Par exemple, le terminal visiophonique permet l'accès au réseau commuté général, la numérotation par un clavier, la visualisation, en incrustation, des numéros composés, l'affichage du coût affecté à une communication en cours, sous forme d'un nombre d'unités de taxe, une prise de ligne sans décrochage, une sonnerie électronique avec le choix entre plusieurs mélodies, etc. D'autres services connus pour les réseaux téléphoniques sont aussi possibles.

La fonction « visiophone » de ce terminal permet l'accès au réseau de fibres optiques. De nombreuses opérations peuvent être réalisées, telles que l'envoi d'une image par enfoncement d'une touche du clavier, l'analyse d'un document, la conservation face à face, le réglage de l'image visualisée, le contrôle du cadrage, le contrôle de l'image transmise, la connexion d'une caméra extérieure, la connexion d'une source extérieure telle qu'un magnétoscope ou un téléviseur, le transfert sur un moniteur de télévision, etc.

Le terminal permet aussi l'utilisation du service « Vidéotex » dont des informations peuvent être affichées directement ou en incrustation.

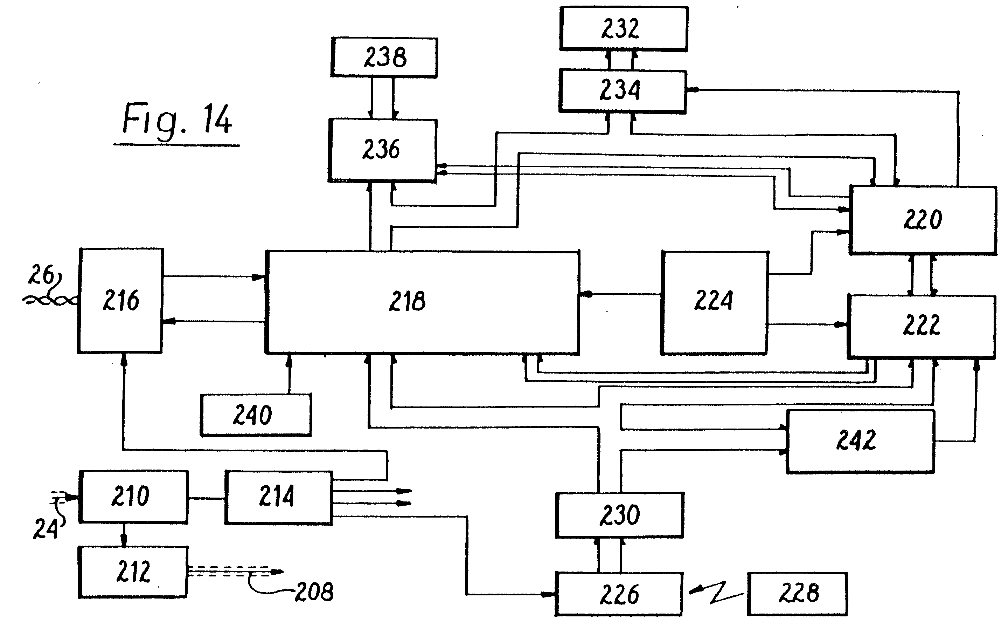

Ces différentes opérations sont réalisées par échange d'informations entre la régie et les terminaux, par l'intermédiaire de la paire symétrique formant une ligne commune numérique. Les interrogations et les réponses sont commandées par la régie d'abonné, si bien que la charge des logiques des terminaux peut être réduite. En particulier, comme décrit dans la suite du présent mémoire en référence à la figure 14, les logiques de certains terminaux peuvent être réduites à une forme très simple.

Les échanges numériques s'effectuent de manière connue avec une structure de mot comprenant avantageusement un bit de début, sept bits d'information, un bit d'identification de la nature du mot, un bit de parité et un bit de fin.

Les échanges s'effectuent essentiellement en trois modes, le mode de scrutation, le mode de commande et le mode « Vidéotex ». En mode de scrutation, le terminal interrogé répond lorsqu'il a reconnu son mot d'identification. Le mot de réponse contient un bit particulier qui indique à la régie d'abonné que le terminal a une information à transmettre. La régie passe alors en mode de commande.

Dans une variante, la régie peut transmettre une interrogation générale et seuls les terminaux ayant un message à transmettre envoient une réponse.

En mode de commande, la régie transmet un mot d'identification immédiatement suivi d'un mot de commande. Le terminal correspondant répond après la réception du mot de commande.

En mode « Vidéotex », les messages sont transmis sous forme d'un mot d'identification particulier suivi d'un nombre de mots de message égal à 64 au maximum. Chaque message est suivi d'un mot d'identification à la suite duquel le terminal accuse réception du message.

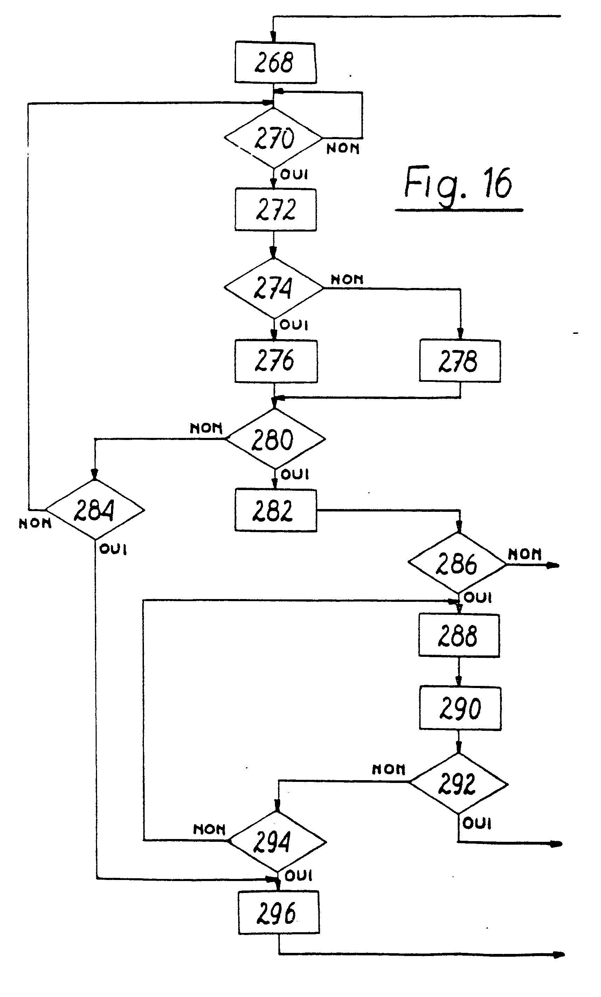

On va considérer maintenant, en référence à l'organigramme de la figure 16, un exemple d'échange entre la régie et un terminal. L'opération commence en 268 par l'enfoncement d'une touche et la conservation du code de la touche ou d'un numéro de programme dans le circuit tampon du terminal. L'opération 270 représente l'interrogation du terminal. Si celui-ci indique qu'une touche a effectivement été enfoncée, le code est transmis à la régie en 272. Celle-ci renvoie un écho. En 274, le terminal détermine si l'écho reçu est convenable. Dans le cas positif, le terminal assure l'acquittement en 276. Dans le cas négatif, le terminal n'assure pas d'acquittement en 278. En 280, la régie détermine si elle a reçu l'acquittement. Si elle l'a reçu, la régie traite le code en 282. Si elle ne l'a pas reçu, elle passe en 284 et détermine si l'opération de non réception de l'acquittement a lieu pour la troisième fois. En conséquence, la régie assure trois interrogations avant de libérer le terminal.

Lorsque la régie a traité le code, l'opération 286 détermine si le code provoque une commande du terminal. Dans le cas positif, la commande est transmise au terminal en 288, et elle est exécutée en 290, avec renvoi d'un écho du code à partir du terminal. La régie détermine en 292 si elle reçoit un écho convenable. Si l'écho n'est pas convenable, elle vérifie en 294 que l'écho n'a pas été reçu convenablement trois fois au moins, et elle libère ensuite le terminal en 296.

On a indiqué que l'essentiel des opérations logiques était exécuté par l'appareil de traitement de signaux numériques. En conséquence, les circuits logiques des terminaux peuvent être réduits au minimum. On considère cette caractéristique en référence à la figure 14 qui représente un exemple d'interface de télévision, destinée à être montée entre la ligne commune de l'installation d'abonné et un moniteur de télévision. Le circuit d'interface est destiné à être raccordé au câble coaxial 24 et à alimenter un câble coaxial 208 parvenant directement à un moniteur de télévision. A cet effet, un filtre d'alimentation 210 reçoit le signal de la ligne commune coaxiale et le transmet à un atténuateur réglable 212 avant transmission au moniteur de télévision. Par ailleurs, le filtre 210 commande un circuit 214 de régulation qui est lui-même relié à différents circuits représentés sur la figure 14.

La ligne 26 de transmission des signaux numériques de commande parvient à une interface numérique 216. Celle-ci est reliée à un émetteur-récepteur asynchrone 218. Celui-ci est associé à un circuit logique 220 de contrôle de réception et un circuit logique 222 de contrôle d'émission. Ces trois derniers circuits sont commandés par une base de temps 224.

Un circuit 226 assure la commande d'un programme. Il est lui même commandé par une télécommande infrarouge 228 et il est relié, par un codeur 230, à l'émetteur-récepteur 218 et au circuit logique 222.

Un dispositif 232 d'affichage indique le numéro du programme demandé, et il est relié à l'émetteur-récepteur 218 par l'intermédiaire d'un décodeur 234. Un comparateur 236 détermine l'identification de l'adresse 238 du terminal. L'appareil comporte en outre un circuit 240 d'initialisation et un circuit 242 de surveillance, d'un type bien connu des hommes du métier.

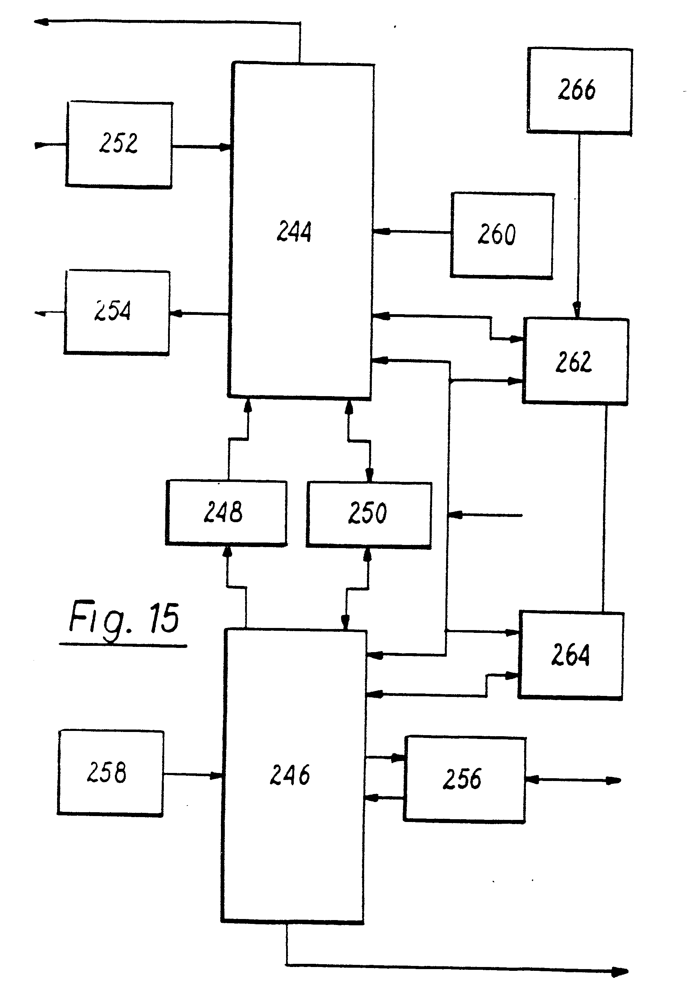

On considère maintenant, en référence à la figure 15, le fonctionnement du circuit de gestion. On a représenté des composants séparés, mais il faut noter que les différents composants sont constitués en réalité par le microprocesseur, les mémoires et les interfaces déjà décrits en référence à la figure 8.

On a représenté deux composants 244 et 246 représentant l'un le programme de transmission et l'autre le programme de traitement des signaux des terminaux. Les deux composants sont reliés par deux circuits tampons 248 et 250 destinés à conserver des signaux intermédiaires. Le programme de transmission nécessite des circuits tampons 252 de réception et 254 d'émission adaptés aux échanges HDLC. L'autre programme nécessite l'utilisation d'un circuit tampon 256 adapté à la vitesse de fonctionnement des terminaux. Des circuits 258 et 260 d'interruption transmettent les demandes des terminaux et du centre de raccordement. Enfin, un moniteur 262 de transmission et un moniteur 264 de traitement des deux programmes peuvent être déclenchés par un dispositif 266 d'initialisation. Les programmes 244, 246 et les moniteurs 262, 264 reçoivent des données d'état de la régie.

Les opérations de transmission, c'est-à-dire le dialogue avec le central, sont exécutées par le programme 244, alors que les opérations de traitement des terminaux, c'est-à-dire la gestion de l'installation d'abonné et le dialogue avec les terminaux, sont exécutées par le programme 246. Chacun des deux programmes est articulé autour d'un moniteur correspondant 262, 264. Les échanges d'informations entre les deux programmes se font par l'intermédiaire de mémoires tampons 248, 250 qui font partie des mémoires 88.

On considère par exemple que le moniteur 262 sélectionne une tâche élémentaire à exécuter. Si la tâche peut être exécutée et lorsqu'elle a été exécutée, le microprocesseur passe au programme de traitement, à une adresse qu'il conserve en mémoire. Si la tâche ne peut être exécutée, par exemple à cause d'une attente d'un événement extérieur (réponse du central, circuit tampon non libre, ...), la table d'états est modifiée et la tâche reste à exécuter. Le microprocesseur passe aussi au programme de traitement, à l'adresse qu'il conserve en mémoire. Le moniteur du programme de traitement enchaîne alors les tâches élémentaires. Si ces tâches présentent une attente d'événement extérieur (réponse des terminaux, circuit tampon non libre, ...), l'adresse d'attente est conservée en mémoire et le microprocesseur repasse au programme de transmission.

Ce fonctionnement cyclique permet une plus grande vitesse de traitement que par utilisation de deux microprocesseurs séparés.

Bien qu'on n'ait décrit qu'un certain nombre d'opérations exécutées par l'appareil de traitement de signaux numériques, d'autres opérations telles que la télésurveillance, la télémaintenance, etc. peuvent être exécutées, d'une manière connue des hommes du métier.

## Revendications

1. Régie d'abonné (14) destinée à être montée entre d'une part une paire de fibres optiques (10, 12) destinées à transmettre un signal optique composite représentatif d'au moins un signal vidéo, d'au moins un signal sonore numérisé et d'au moins un signal global de commande, échangé entre la régie (14) et un centre de raccordement, et d'autre part au moins deux terminaux (16, 18) dont l'un au moins est destiné à recevoir un signal vidéo et dont l'un au moins est destiné à recevoir un signal sonore, chaque terminal (16, 18) étant destiné à être commandé par un signal spécifique de commande et à transmettre à la régie (14) des signaux spécifiques de demande de mise en communication, un terminal au moins étant destiné à transmettre un signal sonore à la régie, ladite régie d'abonné étant caractérisée en ce qu'elle comporte :

un récepteur (30) destiné à être couplé à l'une des fibres optiques et à transformer un signal optique composite d'entrée en un signal électrique composite représentatif d'au moins un signal vidéo, d'au moins un signal sonore numérisé et d'au moins un signal global de commande,

un circuit (102) d'aiguillage destiné à recevoir le signal électrique composite et à séparer au moins un signal sonore numérisé et un signal global de commande,

un appareil (38) de traitement de signaux numériques, comprenant :

un second circuit (62, 64) d'aiguillage destiné à recevoir au moins le signal sonore numérisé et le signal global de commande et à les séparer l'un de l'autre,

un circuit (58) de codage-décodage destiné à décoder les signaux sonores numérisés provenant du second circuit d'aiguillage et à coder des signaux sonores provenant d'au moins un terminal afin qu'ils forment des signaux sonores numérisés,

un circuit (60) de gestion de liaisons destiné d'une part à recevoir le signal global de commande du second circuit d'aiguillage et à transmettre au moins un signal de commande spécifique d'un terminal et d'autre part à recevoir les signaux spécifiques de demande de mise en communication des terminaux et à former des signaux globaux de demande, et

un premier circuit (66, 68) de combinaison destiné à recevoir au moins un signal sonore numérisé représentatif d'un signal sonore provenant d'un terminal et au moins un signal global de demande provenant du circuit de gestion, et à former des signaux numériques comprenant ces signaux sonores numérisés et ces signaux globaux de demande,

un second circuit (118) de combinaison, autre que celui de l'appareil de traitement et destiné à recevoir au moins un signal vidéo provenant d'un terminal, le signal sonore numérisé et le signal global de demande de l'appareil de traitement, et à former un signal électrique composite de sortie, et

un émetteur (32) destiné à être couplé à l'autre fibre optique et à transformer le signal électrique composite de sortie en un signal optique composite correspondant.

2. Régie selon la revendication 1, caractérisée en ce que le second circuit d'aiguillage comporte un décodeur biphase (62) et un démultiplexeur (64).

3. Régie selon l'une des revendications 1 et 2, caractérisée en ce que le premier circuit de combinaison comporte un multiplexeur (66) et un codeur biphase (68).

4. Régie selon l'une quelconque des revendications précédentes, caractérisée en ce que le second circuit d'aiguillage (62, 64) et le premier circuit de combinaison (66, 68) forment une interface numérique (56).

5. Régie selon l'une quelconque des revendications précédentes, caractérisée en ce que le circuit (60) de gestion de liaisons comporte un microprocesseur (76) associé à des mémoires (86, 88) et à des interfaces (82, 84).

6. Régie selon la revendication 5, caractérisée en ce que les mémoires (88) comprennent des circuits tampons d'entrée de signaux globaux de commande, de sortie de signaux spécifiques de commande, d'entrée de signaux spécifiques de demande, de sortie de signaux globaux de demande, et de signaux intermédiaires.

7. Régie selon l'une des revendications 5 et 6, caractérisée en ce que les interfaces comprennent une première interface (82) destinée à échanger des signaux globaux à une première vitesse, et une seconde interface (84) destinée à échanger des signaux spécifiques à une seconde vitesse.

8. Régie selon l'une quelconque des revendications précédentes, caractérisée en ce qu'elle comporte un circuit de scrutation périodique destiné à déterminer successivement l'état de tous les terminaux et à valider l'émission d'un signal de demande par un terminal quelconque.

9. Régie selon l'une quelconque des revendications précédentes, caractérisée en ce qu'elle comporte un circuit de veille destiné à commander ou interrompre l'alimentation d'une partie au moins de la régie, à détecter la réception par l'appareil (38) de traitement d'un signal de commande ou d'un signal de demande au moins et à provoquer en conséquence l'alimentation d'une partie au moins de la régie qui est alors à l'état désexité.

10. Régie selon l'une quelconque des revendications précédentes, caractérisée en ce qu'elle comporte en outre un circuit (48) de test destiné à former un circuit de dérivation à l'intérieur de la régie d'abonné sous forme d'un circuit de bouclage renvoyant un signal vidéo d'une première fibre (10) à une seconde fibre optique (12).

11. Régie selon l'une quelconque des revendications précédentes, caractérisée en ce qu'elle comporte en outre un circuit (46) d'adaptation destiné à recevoir d'une part le signal électrique composite d'entrée et d'autre part un signal vidéo transposé d'entrée et comprenant :

un premier circuit destiné à recevoir le signal composite et à le transmettre à un terminal, et

un second circuit destiné à recevoir le signal vidéo transposé d'entrée et comprenant un circuit (136) de transposition de fréquence.

12. Régie selon l'une quelconque des revendications précédentes, caractérisée en ce qu'elle comporte :

une sortie coaxiale (150) destinée à transmettre des signaux analogiques, notamment des signaux vidéo,

une sortie (152) de signaux numériques de commande, et

une sortie (154) de signaux sonores sous forme analogique.

13. Régie selon l'une quelconque des revendications précédentes, caractérisée en ce qu'elle est destinée à transmettre à un terminal, sous forme d'au moins un signal vidéo du signal composite reçu par la régie, un signal comprenant en combinaison des signaux analogiques représentatifs d'images et d'un son de haute qualité associé.

14. Procédé de traitement de signaux numériques de commande et de demande, du type qui comprend d'une part la réception de signaux globaux de commande et la formation de signaux spécifiques de commande et d'autre part la réception de signaux spécifiques de demande et la formation de signaux de demande, caractérisé en ce qu'il comprend :

une conversion d'un premier type des signaux globaux de commande en signaux intermédiaires de commande,

une conversion d'un second type des signaux intermédiaires de commande en signaux spécifiques de commande,

une conversion d'un troisième type des signaux spécifiques de demande en signaux intermédiaires de demande,

une conversion d'un quatrième type de signaux intermédiaires de demande en signaux globaux de demande, et

la mémorisation temporaire des signaux intermédiaires, le traitement comprenant, en alternance et de façon répétitive,

une première étape comprenant une conversion du premier ou du quatrième type ou une détermination du fait qu'une telle conversion ne peut pas être exécutée immédiatement, et

une seconde étape comportant une conversion du second ou du troisième type ou une détermination du fait que cette conversion ne peut pas être exécutée immédiatement.

15. Procédé selon la revendication 14, caractérisé en ce qu'il comprend en outre la mémorisation temporaire des signaux globaux et spécifiques.

**Claims**

1. Suscriber station (14) to be connected between, on the one hand, a pair of optical fibers (10, 11) for transmitting a composite optical signal representative of at least a video signal, of at least a digitized audio signal and of at least a global control signal, exchanged between said station (14) and a switching center, and on the other hand at least two terminals (16, 18) of which at least one is for receiving a video signal and of which at least one is for receiving an audio signal, each terminal (16, 18) being controlled by a specific control signal and being for transmitting to said station (14) specific communication establishment request signal, at least one terminal being for transmitting an audio signal to said station, said subscriber station being characterized in that it includes :

receiving means (30) to be coupled to one of optical fibers and for converting an incoming composite optical signal into a composite electrical signal representative of at least a video signal, of at least a digitized audio signal and of at least a global control signal,

switching circuit (102) for receiving said composite electrical signal and for separating at least a digitized audio signal and a global control signal,

an apparatus (38) for processing digital signals and including :

second switching circuit (62, 64) for receiving at least digitized audio signal and global control signal and for separating one from the other,

coding-decoding circuit (58) for decoding digitized audio signals from said second switching circuit and for coding audio signals from at least one terminal for forming digitized audio signals,

link management circuit (60) on the one hand for receiving said global control signal from said second switching circuit and for transmitting at least a specific control signal from a terminal, and on the other hand for receiving said specific communication establishment request signals from terminals and for forming said global request signal, and

first combining circuit (66, 68) for receiving at least digitized audio signal representative of audio signal from a terminal and at least a global request signal from said management circuit and for forming digital signals including said digitized audio signal and said global request signal,

second combining circuit (118), different from first combining circuit and for receiving at least a video signal from a terminal, said digitized audio signal and said global request signal from processing apparatus and for forming an outgoing composite electrical signal, and

transmitting means (32) to be coupled to the other optical fiber an for converting said outgoing composite electrical signal into corresponding composite optical signal.

2. Station according to claim 1, characterized in that switching circuit includes a biphase decoder (62) and a demultiplexer (64).

3. Station according to anyone of claims 1 and 2, characterized in that said first combining circuit includes a multiplexer (66) and a biphase coder (68).

4. Station according to anyone of preceding claims, characterized in that said second switching circuit (62, 64) and said first combining circuit (66, 68) constitue a digital interface (56).

5. Station according to anyone of preceding claims, characterized in that said link management circuit (60) includes a microprocessor (76) with memories (86, 88) and interfaces (82, 84).

6. Station according to claim 5, characterized in that said memories (88) include buffer circuits for input global signals, output specific control signals, input specific request signals, output global request signals, and intermediate signals.

7. Station according to anyone of claims 5 and 6, characterized in that interfaces include a first interface (82) for exchanging global signals at a first rate and a second interface (84) for exchanging specific signals at a second rate.

8. Station according to anyone of preceding claims, characterized in that it includes periodical scanning circuit for successively determining all terminal status and for enabling request signal transmission by any terminal.

9. Station according to anyone of preceding claims, characterized in that it includes watching circuit for controlling activation of at least a part of said station, for detecting reception, by processing apparatus (38), of at least a control or of a request signal and for activating at least a part of said station which is then desactivated.

10. Station according anyone of preceding claims, characterized in that it includes a test circuit (48) for forming a branch circuit inside said subscriber station as a loop circuit for returning video signal from first optical fiber (10) to second one (12).

11. Station according to anyone of preceding claims, characterized in that it includes an adapting circuit (46) for receiving on the one hand an incoming composite electrical signal and on the other hand an incoming transposed video signal, said adapting circuit including first circuit for receiving said composite signal and for transmitting it to a terminal, and second circuit for receiving said transposed video signal and including a frequency transposition circuit.

12. Station according to anyone of preceding claims, characterized in that it includes a coaxial output (150) for transmitting analog signals, for example video signals, an output (152) for digital control signals, and an output (154) for analog audio signals.

13. Station according to anyone of preceding claims, characterized in that it is provided for transmitting to a terminal, as at least a video signal from composite signal received by said station, a signal including in combination analog signals representative of pictures and of connected high quality sound.

14. Method for processing digital control and request signals, of the kind which includes on the one hand receiving global control signals and forming specific control signals, and on the other hand, receiving specific request signals and forming global request signals, characterized in that it includes conversion of a first kind for converting global control signals into intermediate control signals, conversion of a second kind for converting said intermediate control signals into specific control signals, conversion of a third kind for converting specific request signals into intermediate request signals, conversion of a fourth kind for converting intermediate request signals into global request signals, and temporarily storing intermediate signals, said processing including, alternatively and repetitively, a first step including a conversion of the first or fourth kind or the determination of the fact that such a conversion cannot be immediately carried out, and a second step including conversion of the second or third kind or the determination of the fact that such a conversion cannot be immediately carried out.

15. Method according to claim 14, characterized in that it includes temporarily storing global and specific signals.

**Patentansprüche**

1. Teilnehmereinrichtung (14) zur Anordnung zwischen einerseits einem Paar optischer Fasern (10, 12) zum Übertragen eines zusammengesetzten optischen Signales, das repräsentativ ist für wenigstens ein Videosignal, wenigstens ein digitales Tonsignal und wenigstens ein Gesamtsteuersignal, das zwischen der Einrichtung (14) und einem Anschlußzentrum ausgetauscht wird, sowie andererseits wenigstens zwei Terminalen (16, 18), von denen wenigstens eines dazu bestimmt ist, ein Videosignal aufzunehmen, und von denen wenigstens eines dazu bestimmt ist, ein Tonsignal aufzunehmen, wobei jedes Terminal (16, 18) dazu bestimmt ist, durch ein spezifisches Steuersignal gesteuert zu werden und spezifische Anforderungssignale zur Herstellung der Verbindung an die Einrichtung (14) zu übertragen, wobei zumindest ein Terminal zur Übertragung eines Tonsignales an die Einrichtung bestimmt ist, gekennzeichnet durch folgende Merkmale :

ein Empfänger (30), der dazu bestimmt ist, mit der einen optischen Faser verbunden zu werden und ein zusammengesetes optisches Eingangssignal in ein zusammengesetztes elektrisches Signal umzuformen, das repräsentativ ist für wenigstens ein Videosignal, wenigstens ein digitalisiertes Tonsignal und wenigstens ein Gesamtsteuersignal,

ein Verzweigungskreis (102), der dazu bestimmt ist, das zusammengesetzte elektrische Signal aufzunehmen und wenigstens ein digitalisiertes Tonsignal und ein Gesamtsteuersignal zu trennen,

eine Verarbeitungsvorrichtung (38) für digitale Signale, enthaltend :

einen zweiten Verzweigungskreis (62, 64), der dazu bestimmt ist, wenigstens das digitalisierte Tonsignal und das Gesamtsteuersignal aufzunehmen und diese voneinander zu trennen,

einen Codierungs-/Decodierungskreis (58) der dazu bestimmt ist, die aus dem zweiten Verzweigungskreis stammenden, digitalisierten Tonsignale zu decodieren und die aus wenigstens einem Terminal stammenden Tonsignale zu codieren, damit sie digitalisierte Tonsignale bilden,

einen Verbindungskreis (60), der dazu bestimmt ist, einerseits das Gesamtsteuersignal des zweiten Verzweigungskreises aufzunehmen und wenigstens ein spezifisches Steuersignal von einem Terminal zu übertragen, und andererseits die spezifischen Anforderungssignale zur Herstellung der Verbindung von den Terminalen aufzunehmen und Gesamtanforderungssignale zu bilden, sowie

ein erster Kombinationskreis (66, 68), der dazu bestimmt ist, wenigstens ein digitalisiertes Tonsignal, das für ein von einem Terminal kommendes Tonsignal repräsentativ ist, und wenigstens ein vom Verbindungskreis stammendes Gesamtanforderungssignal aufzunehmen und digitale Signale zu bilden, die diese digitalisierten Tonsignale und diese Gesamtanforderungssignale enthalten,

ein zweiter Kombinationskreis (118), der sich von dem der Verarbeitungsvorrichtung unterscheidet und dazu bestimmt ist, wenigstens ein von einem Terminal stammendes Videosignal, das digitale Tonsignal und das Gesamtanforderungssignal der Verarbeitungsvorrichtung aufzunehmen sowie ein zusammengesetztes elektrisches Ausgangssignal zu bilden, und

ein Sender (32) der dazu bestimmt ist, mit der anderen optischen Faser verbunden zu werden und das zusammengesetzte elektrische Ausgangssignal in ein korrespondierendes zusammengesetztes optisches Signal umzuformen.

2. Einrichtung nach Anspruch 1, dadurch gekennzeichnet, daß der zweite Verzweigungskreis einen zweiphasigen Decoder und einen Demultiplexer (64) enthält.

3. Einrichtung nach einem der Ansprüche 1 und 2, dadurch gekennzeichnet, daß der erste Kombinationskreis einen Multiplexer (66) und einen zweiphasigen Codierer (68) enthält.

4. Einrichtung nach einem der vorhergehenden Ansprüche, dadurch gekennzeichnet, daß der zweite Verzweigungskreis (62, 64) und der erste Kombinationskreis (66, 68) eine digitale Zwischenfläche (56) bilden.

5. Einrichtung nach einem der vorhergehenden Ansprüche, dadurch gekennzeichnet, daß der Verbindungskreis (60) einen Microprozessor (76) enthält, der mit Speichern (86, 88) und Zwischenflächen (82, 84) verbunden ist.

6. Einrichtung nach Anspruch 5, dadurch gekennzeichnet, daß die Speicher (88) Verschlußkreise zum Eintritt der Gesamtsteuersignale, zum Austritt der spezifischen Steuersignale, zum Eintritt der spezifischen Anforderungssignale, zum Ausgang der Gesamtanforderungssignale und der Zwischensignale enthält.

7. Einrichtung nach einem der Ansprüche 5 und 6, dadurch gekennzeichnet, daß die Zwischenflächen eine erste Zwischenfläche (82) zum Austausch von Gesamtsignalen bei einer ersten Geschwindigkeit und eine zweite Zwischenfläche (84) zum Austausch von spezifischen Signalen bei einer zweiten Geschwindigkeit enthalten.

8. Einrichtung nach einem der vorhergehenden Ansprüche, gekennzeichnet durch einen periodischen Prüfkreis, der dazu bestimmt ist, aufeinanderfolgend den Zustand aller Terminale zu bestimmen und das Aussenden eines Anforderungssignales durch irgendein Terminal für gültig zu erklären.

9. Einrichtung nach einem der vorhergehenden Ansprüche, gekennzeichnet durch einen Überwachungskreis, der dazu bestimmt ist, die Versorgung wenigstens eines Teils der Einrichtung zu steuern oder zu unterbrechen, den Empfang eines Steuersignales oder wenigstens eines Anforderungssignales durch die Verarbeitungsvorrichtung (38) anzuzeigen und dementsprechend die Versorgung wenigstens eines Teiles der Einrichtung zu bewirken, der dann im entregten Zustand ist.

10. Einrichtung nach einem der vorhergehenden Ansprüche, dadurch gekennzeichnet, daß sie außerdem einen Testkreis (48) enthält, der dazu bestimmt ist, einen Abzweigkreis im Innern der Teilnehmereinrichtung in Form eines Schleifenkreises zu bilden, der ein Videosignal von einer ersten Faser (10) auf eine zweite optische Faser (12) schaltet.

11. Einrichtung nach einem der vorhergehenden Ansprüche, dadurch gekennzeichnet, daß sie außerdem einen Anpassungskreis (46) enthält, der dazu bestimmt ist, einerseits das zusammengesetzte elektrische Eingangssignal und andererseits ein umgesetztes Video-Eingangssignal aufzunehmen, enthaltend :

einen ersten Kreis zur Aufnahme des zusammengesetzten Signales und zu dessen Übertragung auf ein Terminal und

einen zweiten Kreis, der dazu bestimmt ist, das umgesetzte Video-Eingangssignal aufzunehmen, und einen Frequenzumsetzungskreis (136) enthält.

12. Einrichtung nach einem der vorhergehenden Ansprüche, gekennzeichnet durch

einen koaxialen Ausgang (150) zur Übertragung von analogen Signalen, insbesondere Videosignalen,

einen Ausgang (152) für digitale Steuersignale und

einen Ausgang (154) für Tonsignale in analoger Form.

13. Einrichtung nach einem der vorhergehenden Ansprüche, dadurch gekennzeichnet, daß sie dazu bestimmt ist, in Form wenigstens eines Videosignales des durch die Einrichtung erhaltenen zusammengesetzten Signales an das Terminal ein Signal zu übertragen, das eine Kombination von Analogsignalen repräsentativer Bilder und eines damit verbundenen Tones hoher Qualität enthält.

14. Verarbeitungsverfahren für digitale Steuer- und Anforderungssignale, enthaltend einerseits die Aufnahme von Gesamtsteuersignalen und die Bildung von spezifischen Steuersignalen und andererseits die Aufnahme von spezifischen Anforderungssignalen und die Bildung von Anforderungssignalen, gekennzeichnet durch

eine Umwandlung eines ersten Typs von Gesamtsteuersignalen in Zwischensteuersignale,

eine Umwandlung eines zweiten Typs von Zwischensteuersignalen in spezifische Steuersignale,

eine Umwandlung eines dritten Typs von spezifischen Anforderungssignalen in Zwischenanforderungssignale,

eine Umwandlung eines vierten Typs von Zwischenanforderungssignalen in Gesamtanforderungssignale, sowie

das vorübergehende Speichern von Zwischensignalen, wobei die Verarbeitung folgendes im Wechsel und in wiederholender Weise enthält :

einen ersten Schritt, enthaltend eine Umwandlung des ersten oder des vierten Typs oder eine Entscheidung, daß eine solche Umwandlung nicht ausgeführt zu werden braucht, und

einen zweiten Schritt, enthaltend eine Umwandlung des zweiten oder des dritten Typs oder eine Entscheidung, daß diese Umwandlung nicht sofort ausgeführt zu werden braucht.

15. Verfahren nach Anspruch 14, dadurch gekennzeichnet, daß es außerdem die vorübergehende Speicherung von Gesamt- und spezifischen Signalen umfaßt.

Fig. 1

Fig. 7

Fig. 2

Fig. 3

Fig. 4

Fig. 5

Fig. 6

Fig. 8

Fig. 9

Fig. 10

Fig. 11

Fig. 12

*Fig. 13*

5

Fig. 14

Fig. 15

Fig. 16